# FASCICULE DE BREVET EUROPEEN

(11) **EP 2 081 799 B1**
(45) Date de publication et mention de la délivrance du brevet: **30.07.2014**
(21) Numéro de dépôt: 07858598.1
(22) Date de dépôt: 16.10.2007
(51) Int. Cl.: B60R 21/34, B62D 25/10

(54) **CAPOT DE VEHICULE AUTOMOBILE MUNI DE CORPS CREUX**
MIT HOHLKÖRPERN VERSEHENE KRAFTFAHRZEUGMOTORHAUBE
MOTOR VEHICLE BONNET PROVIDED WITH HOLLOW BODIES

(30) Priorité: 17.10.2006 FR 0654331
(43) Date de publication de la demande: 29.07.2009
(73) Titulaire: Compagnie Plastic Omnium, 69007 Lyon (FR)
(72) Inventeur: ROCHEBLAVE, Laurent, 69100 Villeurbanne (FR); RAJON, Alexis, Lyon 69004 (FR)
(74) Mandataire: Remy, Vincent Noel Paul
(86) Numéro de dépôt international: PCT/FR2007/052172
(87) Numéro de publication internationale: WO 2008/047043

(56) Documents cités:
- DE-A1- 10 102 762
- JP-A- 2005 239 092
- US-A- 5 605 371
- US-A1- 2005 000 745

## Description

La présente invention concerne un capot de véhicule automobile destiné à fermer un compartiment moteur contenant des pièces rigides.

On sait que le capot d'un véhicule automobile constitue une zone d'impact pour la tête d'un piéton qui serait renversé par l'avant du véhicule. Dans ce cas, en percutant le capot, la tête du piéton subit une décélération brutale, susceptible d'engendrer de graves lésions pour le piéton.

Il est également connu que le capot peut constituer un absorbeur d'énergie efficace pour la tête d'un piéton s'il se déforme en laissant la tête du piéton s'enfoncer dans sa surface. Le capot peut ainsi absorber une quantité importante d'énergie, de façon à limiter la gravité des lésions du piéton.

Pour que le capot constitue un tel absorbeur d'énergie, tout en assurant sa raideur en tension, il est connu de le munir d'une peau extérieure visible et d'une doublure (ou peau intérieure) conformée de sorte que le capot comprend des renforts comportant une pluralité de corps creux délimités par la peau et la doublure.

Une difficulté subsiste néanmoins dans le fait que le compartiment moteur renferme souvent au moins une pièce rigide située très près du capot. Lors de son enfoncement à l'endroit de cette pièce, la tête peut donc se trouver fortement décélérée par appui contre la pièce à travers le capot. De graves lésions peuvent alors se produire.

Mais même si la tête impacte le capot ailleurs qu'à la verticale d'une telle pièce rigide, son enfoncement se trouve limité par le fait que, lors de la déformation du capot, les renforts du capot en regard de la pièce rigide rencontrent cette pièce rigide. Le capot offre alors subitement une résistance élevée à l'enfoncement de la tête, ce qui engendre également des risques de lésions pour le piéton.

Une solution possible, pour assurer la protection des piétons, consiste à éloigner le capot à la verticale de la pièce rigide, en augmentant la hauteur du capot. Toutefois, cette solution s'oppose au besoin actuel des constructeurs automobiles de limiter le plus possible la hauteur du capot de façon à améliorer l'aérodynamisme du véhicule.

Pour éviter de devoir modifier la hauteur du capot, une autre solution, connue du document JP2005/053285, consiste à conformer la doublure de sorte que le capot comprend au moins une zone dépourvue de renfort et destinée à être en regard de la pièce rigide localisée sous le capot.

Un tel capot dispose donc, à la verticale de la pièce rigide du compartiment moteur, d'une marge de déformation plus grande, cette marge n'étant pas réduite par la présence de renforts. Le gain en marge est sensiblement égal à la hauteur des renforts. La tête d'un piéton qui viendrait impacter un tel capot risque donc moins d'entrer en contact avec la pièce rigide.

Un autre capot est connu du JP-A-2005239092, divulguant toutes les caractéristiques du préambule de la revendication 1.

Toutefois, si l'absence locale de renfort permet d'augmenter la marge de déformation du capot, elle engendre également une augmentation de la course de déformation du capot pour un choc d'intensité donnée. En effet, l'absence de renforts réduit la rigidité du capot et sa résistance à l'enfoncement.

Une solution envisageable pour augmenter la marge de déformation du capot sans pour autant augmenter l'enfoncement en cas de choc tête consiste à augmenter l'épaisseur de la peau et/ou de la doublure ce qui engendre cependant une augmentation conséquente de la masse totale du capot.

La présente invention vise à remédier aux inconvénients ci-dessus.

La présente invention a pour objet un capot d'un véhicule automobile selon la revendicaiton 1. Il comporte entre autres une peau extérieure visible et une doublure, dans lequel la doublure est conformée de sorte que :
- le capot comprend des renforts comportant une pluralité de corps creux délimité par la peau et la doublure,
- chaque corps creux de la pluralité s'étendant sensiblement selon la direction longitudinale du véhicule lorsque le capot est monté sur le véhicule,
- le capot comprend au moins une zone dépourvue de renfort et destinée à être en regard d'une pièce rigide localisée sous le capot,
dans lequel les renforts comprennent en outre au moins une nervure s'étendant entre deux des corps creux de la pluralité, de façon à relier ces corps creux.

Par « corps creux », on entend une forme ayant des parois pleines délimitant une cavité sensiblement fermée. Dans le cadre de l'invention, la cavité du corps creux est constituée par une dépression ménagée dans la doublure et recouverte par la peau, la peau et la doublure étant solidarisée par des points de mastic. Par « nervure », on entend une paroi pleine en saillie d'un plan. Dans le cadre de l'invention, la doublure est constituée par une plaque non-plane, conformée de manière à former les dépressions des corps creux et la nervure est en saillie de cette plaque.

Les inventeurs ont constaté que la nervure permet de transmettre les efforts traversant l'un des deux corps creux à l'autre corps creux. Cela permet ainsi une meilleure absorption des chocs puisque la surface de capot participant à cette absorption est accrue. En effet, la déformation liée au choc est mieux répartie entre plusieurs corps creux.

La nervure permet donc d'augmenter la rigidité globale du capot et de réduire sa course de déformation pour un choc d'intensité donnée, y compris dans la zone dépourvue de renforts. De plus, étant donné que l'on n'apporte aucune modification à la zone du capot dépourvue de renforts, la marge de déformation du capot reste inchangée.

La nervure permet en outre de stabiliser les corps creux en les reliant et d'éviter qu'en cas de choc les corps creux ne s'ouvrent. La nervure permet également d'éviter, en cas de choc, un rotulage des corps creux, c'est-à-dire une rotation générale des corps creux autour de l'interstice entre les deux corps creux.

La nervure est en outre constituée d'une quantité de matière réduite et n'augmente pas de façon significative la masse totale du capot.

Un capot selon l'invention peut en outre comprendre l'une ou plusieurs des caractéristiques suivantes.
- Les deux corps creux sont de forme sensiblement allongée et s'étendent sensiblement parallèlement, et la nervure est sensiblement transversale aux corps creux.
- La largeur de chaque corps creux et/ou l'écart entre deux corps creux adjacents est compris entre 40 et 80 mm. On entend par « largeur d'un corps creux » la distance maximale entre deux parois du corps creux délimitant la cavité de celui-ci et par « écart entre deux corps creux adjacents» la distance maximale entre les parois adjacentes des deux corps creux. De cette façon, du fait de ses dimensions, la tête du piéton impacte le capot au droit d'au moins un corps creux et d'une zone interstitielle, située entre les corps, plus fréquemment de deux corps creux et d'une zone interstitielle. Le comportement du capot est donc plus homogène vis-à-vis d'un choc tête qu'un capot pour lequel les corps creux sont plus espacés, notamment un capot en tôle, quel que soit l'endroit où la tête du piéton impacte le capot.
- Les renforts comprennent en outre au moins une nervure s'étendant entre une bordure de la zone dépourvue de renfort et un corps creux voisin de cette zone. Cela permet de limiter encore le rotulage des corps creux voisins de la zone dépourvue de renfort.
- Les renforts comprennent en outre au moins une nervure localisée dans un corps creux, entre la doublure et la peau du capot. De préférence, cette nervure est disposée de façon à relier des parois latérales du corps creux, pour limiter encore l'ouverture des parois latérales du corps creux lors d'un choc tête, ce qui contribue à réduire l'enfoncement du capot.
- La doublure est constituée, dans la zone dépourvue de renfort, d'un voile de matière plaqué contre la peau du capot ou d'un orifice, ce qui permet de réduire la masse du capot.
- La doublure est constituée par une paroi, la paroi étant d'épaisseur supérieure dans la zone dépourvue de renforts que dans le reste de la doublure. Cela permet de rigidifier la doublure dans cette zone et de diminuer encore la déformation du capot lorsque la tête du piéton impacte le capot au droit du point dur.
- La peau est réalisée en aluminium, en acier ou en matière plastique (thermoplastique ou thermodurcissable).
- La doublure est réalisée en matière plastique, notamment en polyamide. Elle peut également être réalisée en composite ou en un matériau hybride métal/plastique. Une doublure en matière plastique est très avantageuse. En effet, le procédé de mise en forme de la matière plastique (le moulage) autorise une plus grande liberté de conception du capot. Une telle doublure peut ainsi présenter un écart entre les corps creux réduit par rapport à un capot en tôle, pour lequel les écarts annoncés plus haut ne peuvent être atteints avec les procédés de mise en forme connus actuellement (emboutissage). On peut également faire varier l'épaisseur de la doublure selon les zones du capot, ce qu'il n'est pas possible de faire de façon simple actuellement avec un capot en tôle. En outre, la matière plastique, du fait de sa raideur moindre que la tôle, permet d'atténuer les différences de raideur entre les corps creux et les zones dépourvues de corps creux, ce qui assure également une meilleure homogénéité du capot. De plus, les corps creux d'une doublure en matière plastique fabriquée par moulage peuvent présenter des parois latérales formant un angle beaucoup plus faible par rapport à la verticale, lorsque la doublure est montée sur le véhicule, que ceux d'un capot en tôle fabriqué par emboutissage. Cela permet d'augmenter le premier pic de décélération subi par la tête et de diminuer son enfoncement.
- La nervure est venue de moulage avec la doublure.
- La doublure est réalisée en un matériau renforcé par des fibres, notamment en SMC (Sheet Moulding Compound) ou AMC (Advanced Moulding Compound).

L'invention sera mieux comprise à la lecture de la description qui va suivre, donnée uniquement à titre d'exemple et faite en se référant aux dessins annexés dans lesquels :
- la figure 1 est une vue en perspective de dessous d'un capot selon un mode de réalisation particulier de l'invention ;
- la figure 2 est une vue en coupe schématique II-II du capot de la figure 1 ;
- la figure 3 est une vue en coupe transversale d'un capot selon l'invention ;
- la figure 4 est une vue d'un détail d'un capot de l'état de la technique ; et

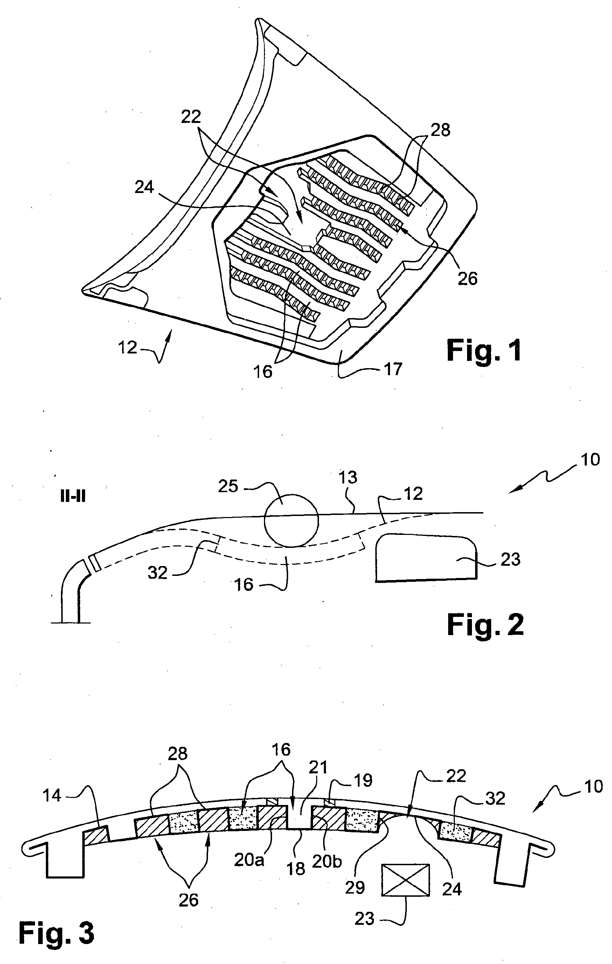

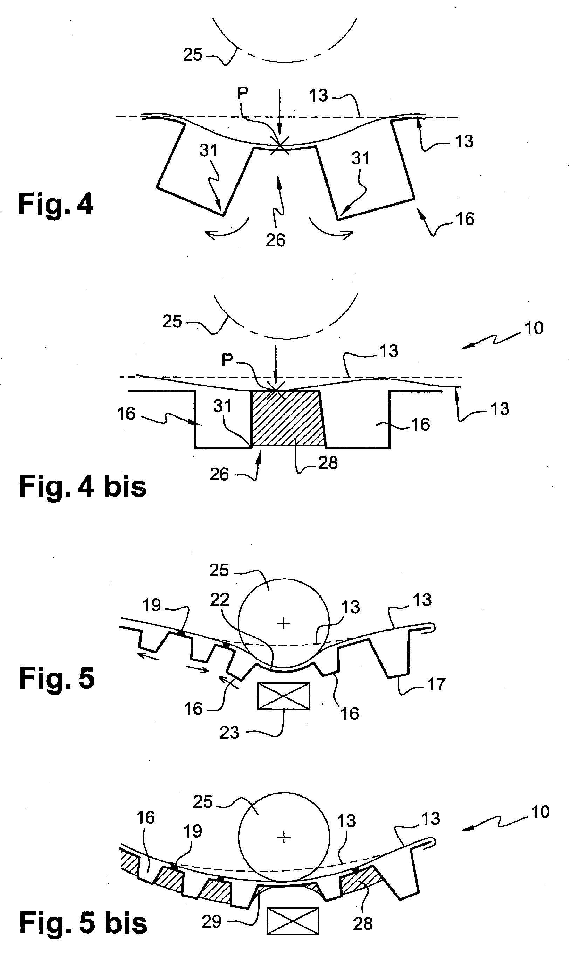

- la figure 4bis est une vue d'un détail du capot de la figure 3.
- la figure 5 est une vue d'un détail d'un capot de l'état de la technique, comprenant la zone dépourvue de renforts ;
- la figure 5bis est une vue d'un détail d'un capot de la figure 3, comprenant la zone dépourvue de renforts.

On a représenté sur la figure 1, une doublure 12 d'un capot 10 selon un mode de réalisation de l'invention. La doublure 12 est constituée par une plaque en matière plastique conformée de sorte qu'elle comprend une pluralité de dépressions 16 formant des orifices débouchant sur une face supérieure 14 de la doublure. La face supérieure 14 de la doublure 12 est destinée à être recouverte par une peau 13 du capot. La doublure 12 comprend également une dépression périphérique 17, formant un cadre délimitant le bord périphérique de la doublure.

Les dépressions 16 sont de forme allongée, sensiblement parallèles et s'étendent dans la direction longitudinale du véhicule automobile lorsque le capot est monté sur le véhicule.

Comme représenté sur la figure 3, chaque dépression 16 est de section essentiellement polygonale et comprend une paroi de fond 18 et deux parois latérales 20a, 20b essentiellement verticales lorsque le capot est monté sur le véhicule. Chaque dépression 16 est recouverte par la peau 13 du capot 10, de sorte qu'elle définit une cavité 21 sensiblement fermée s'étendant entre la doublure 12 et la peau 13 du capot. La peau 13 est en effet fixée à la doublure autour de la dépression 16 par des points de mastic 19. La cavité 21 forme ainsi un corps creux.

Le cadre 17 recouvert par la peau 13 délimite également une cavité périphérique formant un corps creux.

Dans le mode de réalisation décrit, la doublure 12 comprend également deux zones 22 destinées à recouvrir chacune une pièce rigide du compartiment moteur, par exemple une batterie 23 du véhicule automobile, représentée sur la figure 2. Ces zones 22 sont dépourvues de renforts, notamment de corps creux 21 et, dans cette zone, la doublure 12 est uniquement constituée d'une partie de la plaque constituant la doublure, formant voile de matière 24, d'épaisseur de 2 à 5 mm, et destiné à être plaqué contre la peau 13, dans ce cas à l'épaisseur près du mastic.

Sur la figure 2, on voit que, lors d'un impact d'une tête 25 de piéton sur le capot 13, la doublure 12 du capot 10 (représentée en pointillés après déformation) peut se déformer en accompagnant la tête de piéton 25 sans rencontrer la batterie électrique 23 grâce au fait que dans la zone 22 en regard de cette batterie 23, la doublure 12 ne comporte aucun renfort.

La doublure 12 comprend également des zones interstitielles 26, délimitées par les corps creux 21, visibles sur la figure 3.

La largeur L1 des zones interstitielles 26, correspondant à l'écart entre deux corps creux 21 adjacents est comprise entre 40 et 80 mm, tout comme la largeur L2 de chaque corps creux 21, c'est à dire la distance entre les parois 20a et 20b de celui-ci.

Ces zones interstitielles 26 comprennent des nervures 28 en saillie de la face inférieure de la plaque constituant la doublure.

Les nervures 28 s'étendent entre les corps creux 21 transversalement à ces corps creux 21, c'est-à-dire selon la direction transversale du véhicule automobile lorsque le capot est monté sur le véhicule.

Les nervures relient les parois latérales 20a, 20b de deux corps creux voisins 21. Elles sont dimensionnées de sorte qu'elles sont sensiblement de même hauteur que les corps creux 21 et permettent, lors de l'enfoncement du capot consécutivement à un choc tête, d'homogénéiser la déformation du capot et d'éviter le rotulage des corps creux.

Les figures 4 et 4bis représentent l'effet d'un impact d'une tête de piéton 25 dans une zone interstitielle 26 du capot. La figure 4 représente un capot de l'état de la technique et la figure 4bis représente un capot selon l'invention.

Comme on le voit sur la figure 4, dans l'état de la technique, suite à un choc de la tête 25 de piéton en un point P dans la zone interstitielle 26 située entre deux corps creux voisins 21, la peau 13 s'enfonce par rapport à sa position initiale représentée en pointillés. La doublure absorbe mal l'énergie du choc et la peau s'enfonce beaucoup du fait d'un rotulage des corps creux voisins du point d'impact P. Lors du rotulage, les extrémités inférieures 31 des parois latérales opposées 20a, 20b des deux corps creux voisins s'éloignent l'une de l'autre.

Cet enfoncement important peut entraîner une augmentation de la course de déformation pour un choc d'intensité donnée dans les zones dépourvues de renfort. La course de déformation est alors susceptible de consommer toute la marge de déformation, ce qui peut entraîner de graves lésions pour le piéton lors du contact avec la pièce rigide 23.

En revanche, comme cela est représenté sur la figure 4bis, lors d'un choc de la tête d'un piéton 25 dans une zone interstitielle 26 du capot selon l'invention, le rotulage des corps creux est fortement limité. En effet, les extrémités inférieures 31 des parois latérales 20a, 20b opposées des deux corps creux 21 voisins sont reliées par la nervure 28 et la distance entre ces deux extrémités reste donc sensiblement constante. Ainsi, la doublure se déforme peu et la nervure 28 transmet l'effort dû au choc tête aux corps creux voisins de la zone interstitielle, permettant l'absorption de l'énergie du choc par une grande surface du capot et évitant un enfoncement important du capot.

En outre, comme on le voit sur la figure 4bis, du fait des dimensions des corps creux 21 et des zones interstitielles 26, la tête du piéton est forcément placée au droit d'un corps creux 21 lors d'un impact avec le capot, ce qui permet d'augmenter la décélération de la tête et de diminuer son enfoncement.

Sur la figure 3, des nervures 29 sont également prévues entre une bordure de la zone 22 dépourvue de renfort et chaque corps creux 21 immédiatement voisin de la zone 22. Ces nervures sont disposées de façon à conserver la marge de déformation au-dessus de la pièce rigide 23. Ces nervures 29 sont optionnelles.

On voit que les renforts comprennent en outre des nervures 32, localisées à l'intérieur de certains corps creux 21, en saillie de la face supérieure de la plaque constituant la doublure. Ces nervures 32 permettent de relier les parois latérales 20a, 20b d'un même corps creux. L'ouverture des parois latérales du corps creux est ainsi limitée lors d'un choc tête. Ces nervures 32 sont optionnelles.

Les figures 5 et 5bis représentent l'effet d'un impact d'une tête de piéton 25 dans une zone dépourvue de renfort 22. La figure 5 représente un capot de l'état de la technique et la figure 5bis représente un capot selon l'invention.

Comme on le voit sur la figure 5, lors d'un choc tête au niveau de la zone 22, les corps creux voisins rotulent, c'est-à-dire que les extrémités inférieures 31 des corps creux immédiatement voisins de la zone 22 s'éloignent et se rapprochent respectivement des extrémités inférieures des corps creux proches et non voisins de la zone 22. La peau 13 s'enfonce donc fortement dans la zone 22 par rapport à sa position initiale représentée en pointillés.

Sur la figure 5bis, les nervures 28 et 29 permettent de limiter le rotulage des corps creux, d'une part, en gardant constante la distance entre les corps creux proches et, d'autre part, en gardant l'inclinaison constante entre la doublure au voisinage de la zone dépourvue de renfort 22 et le corps creux immédiatement voisin, à l'aide de la nervure 29. L'effort dû au choc est donc transmis aux corps creux voisins et la courbe de déformation du capot est plus tendue, c'est-à-dire que l'enfoncement est moins localisé, moins important et mieux réparti sur la surface du capot.

Dans le mode de réalisation représenté, la peau de capot 13 est réalisée en aluminium et la doublure 12 est réalisée en matière plastique moulée, notamment en matière plastique renforcée par des fibres, telle que le SMC (Sheet Moulding Compound) ou l'AMC (Advanced Moulding Compound).

Un capot réalisé en matière plastique offre plus de liberté de conception qu'un capot en tôle et permet d'augmenter l'homogénéité du capot et, de ce fait, de maximiser la robustesse de conception, améliorant ainsi la protection du piéton subissant le choc tête.

Les nervures 28, 29, 32 sont également réalisées en matière plastique et sont moulées avec la doublure 12, ce qui permet une fabrication simple du capot. Ces nervures peuvent être de hauteur plus importante que les corps creux 16 et être également reliées à la paroi de fond 18 de ces corps creux 21.

En outre, la partie avant et/ou arrière du cadre 17 de la doublure 12 (s'étendant dans la direction transversale du véhicule lorsque le capot est monté sur le véhicule) peut également comporter des nervures 32 transversales (c'est-à-dire s'étendant dans la direction longitudinale du véhicule lorsque le capot est monté sur le véhicule), s'étendant à l'intérieur de la partie avant et/ou arrière du cadre 17, de façon à éviter l'ouverture et le rotulage de cette dépression périphérique, notamment lorsque d'un choc tête en bordure de capot.

Les corps creux peuvent s'étendre selon une autre configuration que celle représentée, par exemple en étoile ou en serpentant dans un plan horizontal autour d'une direction correspondant à la direction longitudinale du véhicule, lorsque le capot est monté sur le véhicule.

La doublure peut également être d'épaisseur variable, notamment plus épaisse dans les zones dépourvues de renfort.

Enfin, on ne se limite pas aux matériaux décrits. La peau peut notamment être réalisée en matière plastique (thermoplastique ou thermodurcissable), en acier ou en tôle et la doublure peut être réalisée en un matériau métallique, auquel cas les nervures sont rapportées ou surmoulées sur la doublure.

Il est bien entendu que le mode de réalisation et les variantes qui viennent d'être décrits ne présentent aucun caractère limitatif et pourront recevoir toutes autres modifications désirables sans sortir pour cela du cadre de l'invention, qui est définit par les revendications.

## Revendications

1. Capot (10) d'un véhicule automobile, comportant une peau (13) extérieure visible et une doublure (12), dans lequel la doublure (12) est conformée de sorte que :
- le capot (10) comprend des renforts comportant une pluralité de corps creux (21) délimités par la peau (13) et la doublure (12), chaque corps creux (21) s'étend sensiblement selon la direction longitudinale du véhicule lorsque le capot est monté sur le véhicule, et
- le capot (10) comprend au moins une zone (22) dépourvue de renfort et destinée à être en regard d'une pièce rigide (23) localisée sous le capot,
**caractérisé en ce que** les renforts comprennent en outre au moins une nervure (28) s'étendant entre deux des corps creux (21) de la pluralité, transversalement à ces corps creux, de façon à relier ces corps creux (21), la nervure (28) étant en saillie de la face intérieure de la plaque constituant la doublure.

2. Capot (10) selon la revendication précédente, dans lequel les deux corps creux (21) étant de forme sensiblement allongée et s'étendant sensiblement parallèlement, la nervure (28) est sensiblement transversale aux corps creux (21).

3. Capot (10) selon l'une quelconque des revendications précédentes, dans lequel la largeur de chaque corps creux et/ou l'écart entre deux corps creux adjacents est compris entre 40 et 80 mm.

4. Capot (10) selon l'une quelconque des revendications précédentes, dans lequel les renforts comprennent en outre au moins une nervure (32) localisée dans un corps creux (21), entre la doublure et la peau.

5. Capot (10) selon l'une quelconque des revendications précédentes, dans lequel les renforts comprennent en outre au moins une nervure (29) s'étendant entre une bordure de la zone (22) dépourvue de renfort et un corps creux (21) voisin de ladite zone (22).

6. Capot (10) selon l'une quelconque des revendications précédentes, dans lequel, dans la zone (22) dépourvue de renfort, la doublure (12) est constituée d'un voile (24) de matière plaqué contre la peau (13) du capot ou comprend un orifice.

7. Capot (10) selon l'une quelconque des revendications 1 à 5, dans lequel la doublure est constituée par une paroi, la paroi étant d'épaisseur supérieure dans la zone (22) dépourvue de renforts que dans le reste de la doublure.

8. Capot (10) selon l'une quelconque des revendications précédentes, dans lequel la peau (13) est réalisée en aluminium, en acier ou en matière plastique.

9. Capot (10) selon l'une quelconque des revendications précédentes, dans lequel la doublure (12) est réalisée en matière plastique, notamment en polyamide, en composite, notamment en un matériau renforcé de fibres, tel que le SMC (Sheet Moulding Compound) ou l'AMC (Advanced Moulding Compound), ou en un matériau hybride métal/plastique.

10. Capot (10) selon la revendication précédente, dans lequel la nervure (28, 29, 32) est venue de moulage avec la doublure (12).

## Patentansprüche

1. Motorhaube (10) für ein Kraftfahrzeug, mit einer sichtbaren äußeren Haut (13) und einer inneren Verkleidung (12), wobei die innere Verkleidung (12) so ausgebildet ist, dass:
- die Motorhaube (10) Versteifungen umfasst, die eine Vielzahl von Hohlkörpern (21) aufweisen, die durch die Haut (13) und die innere Verkleidung (12) begrenzt werden, wobei jeder Hohlkörper (21) sich im Wesentlichen in der Längsrichtung des Fahrzeugs erstreckt, wenn die Motorhaube auf dem Fahrzeug montiert ist, und
- die Motorhaube (10) mindestens eine Zone (22) ohne Versteifung umfasst, die dafür bestimmt ist, einem unter der Motorhaube angeordneten starren Teil (23) gegenüber zu liegen, **dadurch gekennzeichnet, dass** die Versteifungen ferner mindestens eine Rippe (28) umfassen, die sich zwischen zwei der Hohlkörper (21) der Vielzahl, quergerichtet zu diesen Hohlkörpern, erstreckt, derart, dass sie diese Hohlkörper (21) verbindet, wobei die Rippe (28) von der innen liegenden Seite der Platte, welche die innere Verkleidung bildet, vorspringt.

2. Motorhaube (10) nach dem vorhergehenden Anspruch, wobei, da die zwei Hohlkörper (21) eine im Wesentlichen langestreckte Form haben und sich im Wesentlichen parallel erstrecken, die Rippe (28) zu den Hohlkörpern (21) im Wesentlichen quergerichtet ist.

3. Motorhaube (10) nach einem der vorhergehenden Ansprüche, wobei die Breite jedes Hohlkörpers und/oder der Abstand zwischen zwei benachbarten Hohlkörpern zwischen 40 und 80 mm beträgt.

4. Motorhaube (10) nach einem der vorhergehenden Ansprüche, wobei die Versteifungen ferner mindestens eine Rippe (32) umfassen, die in einem Hohkörper (21), zwischen der inneren Verkleidung und der Haut, angeordnet ist.

5. Motorhaube (10) nach einem der vorhergehenden Ansprüche, wobei die Versteifungen ferner mindestens eine Rippe (29) umfassen, die sich zwischen einem Rand der Zone (22) ohne Versteifung und einem Hohlkörper (21) nahe der Zone (22) erstreckt.

6. Motorhaube (10) nach einem der vorhergehenden Ansprüche, wobei, in der Zone (22) ohne Versteifung, die innere Verkleidung (12) von einer Materialschale (24) gebildet ist, die gegen die Haut (13) der Motorhaube gepresst ist, oder eine Öffnung umfasst.

7. Motorhaube (10) nach einem der Ansprüche 1 bis 5, wobei die innere Verkleidung von einer Wand gebildet ist, wobei die Wand in der Zone (22) ohne Versteifungen von größerer Dicke ist als in der übrigen inneren Verkleidung.

8. Motorhaube (10) nach einem der vorhergehenden Ansprüche, wobei die Haut (13) aus Aluminium, aus Stahl oder aus Kunststoff ausgebildet ist.

9. Motorhaube (10) nach einem der vorhergehenden Ansprüche, wobei die innere Verkleidung (12) aus Kunststoff, insbesondere aus Polyamid, aus Verbundmaterial, insbesondere aus einem faserverstärkten Material, wie SMC (Sheet Moulding Compound) oder AMC (Advanced Moulding Compound), oder aus einem Metall-Kunststoff-Hybridmaterial ausgebildet ist.

10. Motorhaube (10) nach dem vorhergehenden Anspruch, wobei die Rippe (28, 29, 32) an die innere Verkleidung (12) angeformt ist.

## Claims

1. A motor vehicle hood (10) comprising a visible outside skin (13) and a lining (12), in which the lining is shaped in such a manner that:
- the hood (10) has reinforcements comprising a plurality of hollow bodies (21) defined by the skin (13) and by the lining (12), each hollow body (21) extends substantially in the longitudinal direction of the vehicle when the hood is mounted on the vehicle ; and
- the hood (10) includes at least one zone (22) having no reinforcement and designed to be placed in register with a localized rigid part (23) under the hood;
**characterized in that** the reinforcements further comprise at least one rib (28) extending between two of the hollow bodies (21) of the plurality, transversely relative to the hollow bodies (21), so as to interconnect the hollow bodies (21), the rib (28) projecting from the inner face of the plate constituting the lining.

2. A hood (10) according to the preceding claim, in which the two hollow bodies (21) are of substantially elongate shape and extend substantially parallel, the rib (28) extending substantially transversely relative to the hollow bodies (21).

3. A hood (10) according to any of the preceding claims, in which the width of each hollow body and/or the spacing between two adjacent hollow bodies lies in the range 40 mm to 80 mm.

4. A hood (10) according to any of the preceding claims, in which the reinforcements further comprise at least one rib (32) localized in a hollow body (21), between the lining and the skin.

5. A hood (10) according to any of the preceding claims, in which the reinforcements further comprise at least one rib (29) extending between a margin of the zone (22) having no reinforcement and a hollow body (21) adjacent to said zone (22).

6. A hood (10) according to any of the preceding claims, in which, in the zone (22) having no reinforcement, the lining (12) is constituted by a web (24) of plastics material against the skin (13) of the hood, or includes an orifice.

7. A hood (10) according to any of the preceding claims 1 to 5, in which the lining is constituted by a wall, the wall being of greater thickness in the zone (22) having no reinforcement than in the remainder of the lining.

8. A hood (10) according to any of the preceding claims, in which the skin (13) is made of aluminum, of steel, or of plastics material.

9. A hood (10) according to any of the preceding claims, in which the lining (12) is made of plastics material, in particular of polyamide, of composite material, in particular a fiber-reinforced material such as sheet molding compound (SMC) or advanced molding compound (AMC), or of a metal/plastic hybrid material.

10. A hood (10) according to the preceding claim, in which the rib (28, 29, 32) is integrally molded with the lining (12).
